# EUROPEAN PATENT APPLICATION

(11) **EP 1 705 573 A1**
(43) Date of publication of application: **27.09.2006**
(21) Application number: 05703602.2
(22) Date of filing: 14.01.2005
(51) Int. Cl.: G06F 12/00, G06F 12/14, G06F 9/445

(54) **INFORMATION DEVICE**

(30) Priority: 15.01.2004 JP 2004007971
(71) Applicant: MATSUSHITA ELECTRIC INDUSTRIAL CO., LTD., Kadoma-shi, Osaka 571-8501 (JP)
(72) Inventor: UCHIDA, Osamu Matsushita El. Ind. Co., Ltd.,, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/000363
(87) International publication number: WO 2005/069146

(57) **Abstract**

An improper file operation that loses the conformity of data in specific directories conformed to an application standard is prevented. There are provided directory/file information obtaining unit for obtaining directory information stored in a mounted recording medium, list information coincidence judging unit 14 for judging whether a directory name of a directory contained in the directory information obtained by the directory/file information obtaining unit 12 is contained in a list of directory names conformed to an application standard concerning storage of data of each application, and a directory/file list display content creating unit 13 for enabling an access to data in a directory having a direction name contained in the list through only an application adapted to the directory concerned when the directory of the directory name concerned is selected.

## Description

### Technical Field

The present invention relates to information equipment on which a storage media is detachably mounted.

### Background Art

According to an operating system for conventional information equipment, such system files as to exercise an critical effect on the system are generally non-displayed in advance in a list display of stored files and directories containing the files (so-called directory structure) in order to prevent users from carrying out an erroneous operation such as deletion of the files, etc., and this non-display state is allowed to be released by setting. When the non-display state is released, a non-displayed system file can be displayed in a list even if it has a critical effect on the system. Furthermore, there is known a technique in which a monitoring unit for monitoring alteration of system files is provided to prevent the system files from being altered by users, and the monitoring unit preserves copies of the original files (for example, see Patent Document 1).

Patent Document 1: JP-T-2003-503793

### Disclosure of the Invention

### Problem to be solved by the Invention

There is a case where application standards in which specifications of the directory names of directories created when data are stored and file names created in the directories concerned are indicated every application are settled for removable media mounted in information equipment (for example, memory cards).

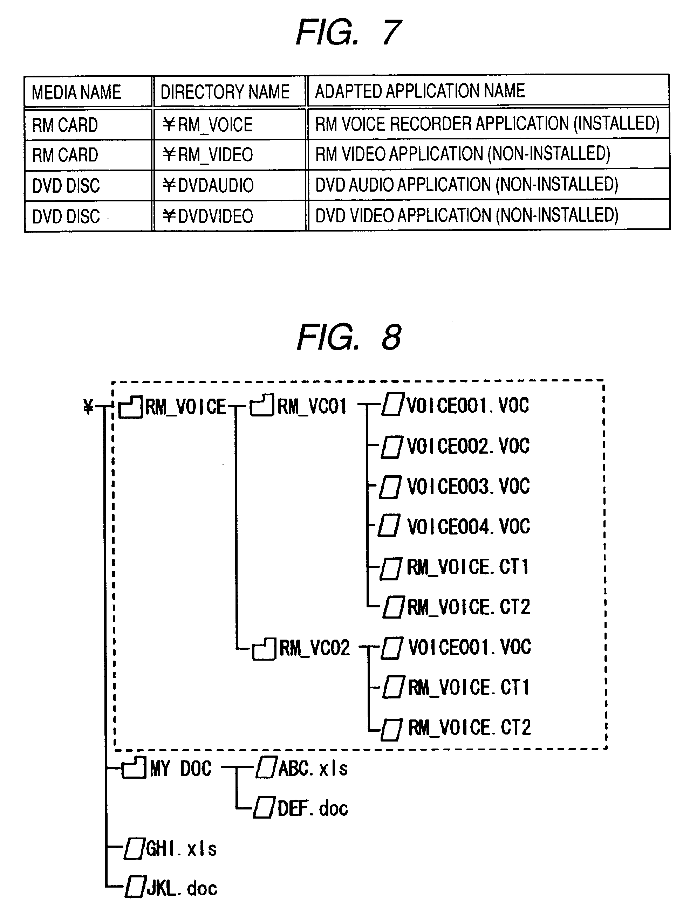

Fig. 8 is a diagram showing the directory structure of a conventional memory card. For example, in the case of data storage of a voice recorder application, such a specification that specific directories having predetermined names are created just below the root directory and further voice content files and management files are created in the sub directories thereof as shown in Fig. 8 is determined as an application standard. Furthermore, specifications are also determined for the file structures of individual voice content files and management files for managing management information concerning all the voice content files in the sub directories.

Therefore, the operation on specific directories and files in the directories which are conformed to the application standards should be originally carried out by only applications adapted to the application standards concerned. Accordingly, it is preferable that when information equipment having a removable medium containing specific directories mounted therein does not have any adapted application, the information equipment cannot carry out any operation on the files in the specific directories. The reason for this will be described with reference to Fig. 8. For example, even when a user deletes only one content file from specific directories containing voice content files and management files at user's own choice, inconformity occurs between the content data and the management files and the present state falls into an application standard contravention state. Therefore, there occurs such a situation that it is impossible to reproduce even other contents.

In the conventional operating system, however, there is no mechanism of controlling allowance/prohibition of the operation on a directory or a file (or, allowance/prohibition of a list display for enabling the operation), and it is possible to carry out deletion, etc. on even a file in a specific directory which is conformed to an application standard. Therefore, there is a problem that the conformity of data in the directories may be easily lost by an improper file operation.

The present invention has an object to provide information equipment that can prevent an improper file operation which loses the conformance of data in specific directories conformed to an application standard.

### Means of solving the Problem

Information equipment according to the present invention is an information equipment on which a recording medium is detachably mounted, comprising: a directory information obtaining unit that obtains directory information stored in the recording medium mounted; a directory judging unit that judges whether a directory name of a directory contained in the directory information obtained by the directory information obtaining unit is contained in a list of directory names conformed to an application standard defining a specification concerning storage of data of each application; and an access restricting unit that, when the directory of the directory name contained in the list is selected, enables an access to the data in the selected directory through only an application adapted to the selected directory. According to this construction, when a specific directory conformed to the application standard is selected, an application adapted to the selected directory is activated, and an operation of directly deleting or editing a file in the directory can be prevented, and thus the conformance of the data can be kept.

In the present invention, when the directory of the directory name contained in the list is selected, the access restricting unit judges whether an application adapted to the selected directory exists in the information equipment, and activates the application when the application adapted to the selected directory exists while outputting a message indicating inaccessibility when no application adapted to the selected directory exists. According to this construction, if a specific directory conformed to the application standard is selected when no adapted application is installed, the access to the directory concerned is rejected, so that the operation of directly deleting or editing a file in the directory is prevented and the conformance of the data can be kept.

Furthermore, the information equipment according to the present invention further comprises a judgment result outputting unit that outputs a judgment result of the directory judging unit with respect to all the directories obtained by the directory information obtaining unit. According to this construction, it is grasped whether any specific directory conformed to the application standard exists for all the directories contained in a mounted medium. Therefore, an improper file operation on a specific directory can be prevented.

In the present invention, the judgment result outputting unit displays a directory name contained in the list and a directory name which are not contained in the list while varying color therebetween. According to this construction, it can be clearly discriminated whether each of all the directories contained in the mounted medium is a specific directory conformed to the application standard.

In the present invention, the judgment result outputting unit displays a directory name contained in the list along with an icon associated with an application adapted to a directory of the directory name. According to this construction, it can be grasped whether each of all the directories contained in the mounted medium is a specific directory conformed to the application standard, and further when some directory is a specific directory, an adapted application can be also grasped.

In the present invention, the list information obtaining unit obtains the list stored in the information equipment. According to this construction, an application adapted to a specific directory conformed to the application standard can be grasped irrespective of the type of a medium to be mounted.

In the present invention, the list information obtaining unit obtains the list stored in the mounted recording medium. According to this construction, information concerning a specific directory conformed to the application standard can be grasped even when a medium is mounted in any information equipment.

In the present invention, a directory name conformed to the application standard is associated with the type of a recording medium. According to this construction, with respect to a specific directory conformed to an application standard inherent to the medium, only when the directory concerned exists in the medium, an access into the directory concerned can be controlled.

### Effect of the Invention

According to the present invention, only when an application adapted to a specific directory conformed to an application standard is installed, an access to a file in the specific directory concerned is allowed, whereby the conformance of data in the specific directory can be prevented from being lost by an improper file operation.

### Brief Description of the Drawings

[Fig. 1] is a block diagram showing the function of a portable terminal according to an embodiment of the present invention.
[Fig. 2] is a flowchart showing a processing procedure of directory file information of the portable terminal according to the embodiment of the present invention.
[Fig. 3] is a flowchart showing a processing procedure of a directory file list display.
[Fig. 4] is a flowchart showing another processing procedure of a directory file list display.
[Fig. 5] is a flowchart showing a processing procedure of directory edition control.
[Fig. 6] is a flowchart showing another processing procedure of directory edition control.
[Fig. 7] is a conceptual diagram showing list information containing media types.
[Fig. 8] is a diagram showing a directory structure of a conventional memory card.

### Reference Numerals

- 10: Portable terminal
- 11: media access unit
- 12: directory/file information obtaining unit
- 13: directory/file list display content creating unit
- 14: list information coincidence judging unit
- 100: removable media

### Best Modes for Carrying out the Invention

Information equipment according to an embodiment of the present invention will be described hereunder with reference to the drawings. The following description will be made by using a portable terminal such as a cellular phone or the like as an example of the information equipment.

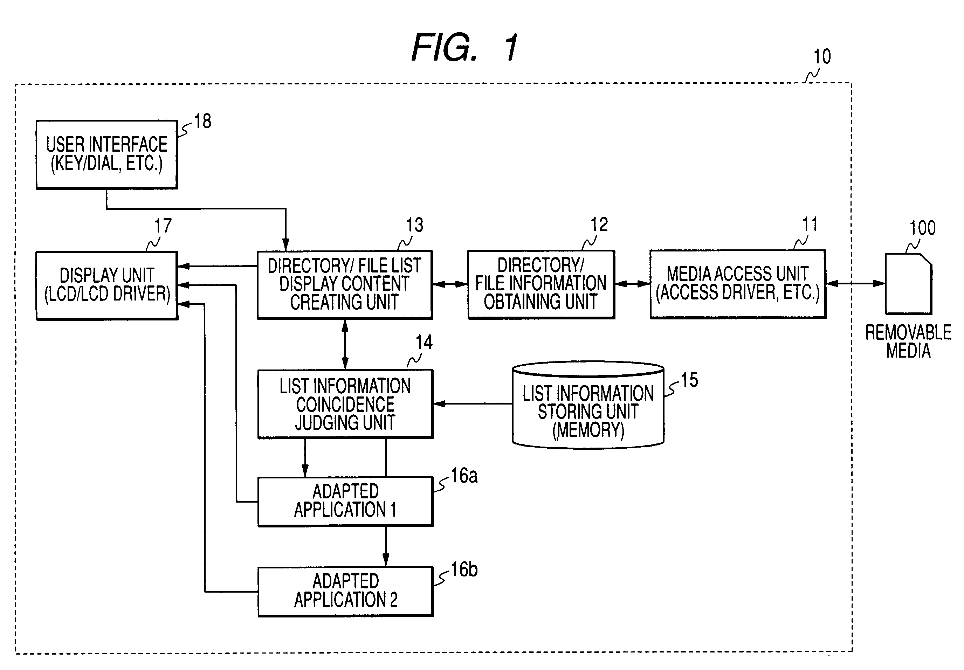

Fig. 1 is a block diagram showing the function of the portable terminal according to the embodiment of the present invention. Fig. 1 shows the processing function of directory/file information, and the description on parts carrying out the basic processing of the portable terminal such as call origination, call reception, communication, etc. are omitted.

A portable terminal 10 is configured so that a removable medium (recording medium) 10 is detachably mounted in the portable terminal 10, and the portable terminal 10 obtains information of directories and files recorded in the removable medium 100. Accordingly, the portable terminal 10 includes a media access unit 11 for detecting that the removable medium 100 is mounted in the main body of the portable terminal 10 and accessing data in the removable medium 100 after the detection, a directory/file information obtaining unit 12 for obtaining directory/file information recorded in the removable medium 100 thus mounted, a directory/file list display content creating unit 13 for carrying out a list display of the directories/files on the basis of the directory/file information, a list information coincident judging unit 14 for judging whether some of the directory names contained in the directory/file information obtained from the removable medium 100 are coincident with some of the directory names of the list information obtained in advance, and a list information storing unit 15 for storing the list information.

When it is detected that the removable medium 100 is mounted in the main body of the portable terminal 10, the media access unit 11 reads in the recording data of the removable medium 100. The file management is hierarchically carried out in the portable terminal of this embodiment, and in conformity with this management style, files are recorded in a hierarchical structure in the removable medium 100. The directory/file information obtaining unit 12 obtains directory/file information containing information on the directory names recorded in the removable medium 100.

The directory/file list display content creating unit 13 carries out the display processing of the list of the directories/files (so-called, directory structure diagram)on the basis of the directory/file information thus obtained. At this time, the display content is properly changed on the basis of the judgment result of the list information coincidence judging unit 14. A method of changing the display content will be described later in detail. The directory/file list display content creating unit 13 detects an input from a user interface 18 to judge whether which directory or file of the display list is selected.

The list information is a table of the directory names of specific directories conformed to the application standard, and the list information is stored in the list information storing unit 15 in advance. Information concerning applications adapted to the specific directories may be additionally stored in the list information. By referring to the table, the portable terminal 10 can judge whether the individual directories of the data recorded in the mounted medium are specific directories associated with inherent applications (or inherent media described later), and allowance or prohibition of an access to the files in the directories is determined on the basis of the above judgment. The list information may be obtained from the mounted removable medium 100 and stored in the list information storing unit 15.

The list information coincidence judging unit 14 judges whether some of directory names of the direction/file information obtained are coincident with some of the directory names in the list information. If there is any coincident directory name, it is judged whether an application adapted to the specific directory concerned is installed or not. When the adapted application is installed, the application concerned is started and the content contained in the directory concerned is set to be executable by the application concerned. On the other hand, when no adaptable application is installed, the file operation in the directory concerned is restricted according to the setting described later.

The portable terminal 10 includes a display unit 17 for carrying out a list display of the applications 16 (16a, 16b, etc.) corresponding to the contents, the directories/files and various kinds of displays, a user interface 18 for accepting various kinds of inputs from a user to the portable terminal 10, etc.

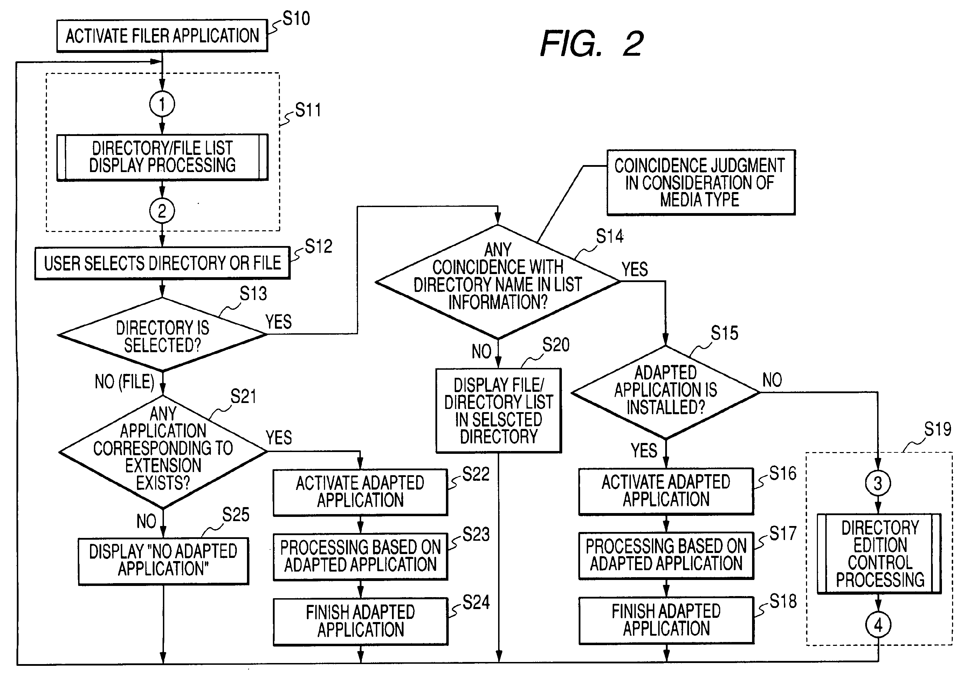

Fig. 2 is a flowchart showing the processing procedure of directory/file information of the portable terminal according to the embodiment of the present invention. When a file application of the portable terminal 10 is started (step S10), the directory file list display content creating mans 13 creates a directory/file list on the basis of the directory/list information obtained from the removable medium 100 mounted in the portable terminal 10, and carries out list display processing (step S11).

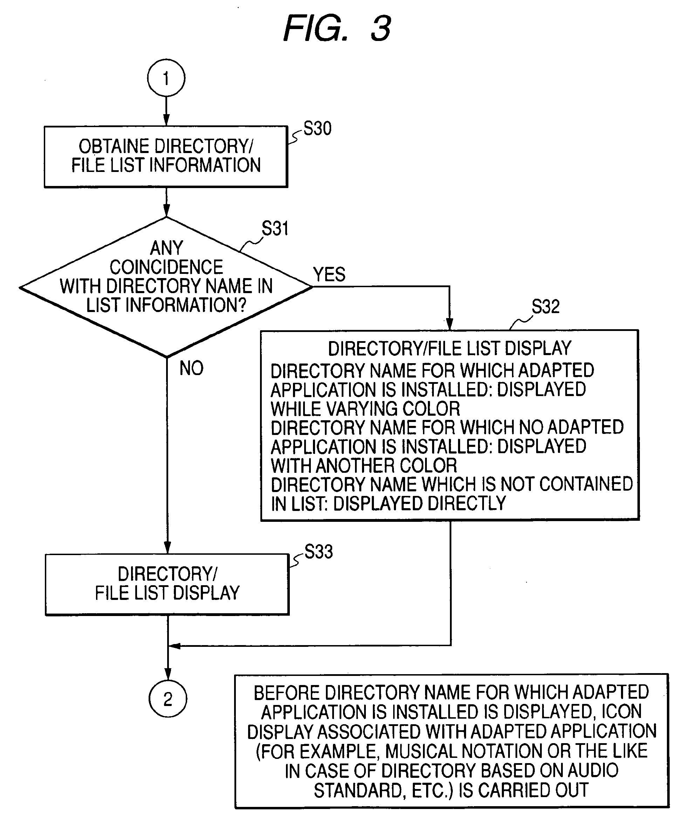

Fig. 3 is a flowchart showing an example of the processing procedure of the directory/file list display.
The directory/file list display content creating unit 13 obtains directory/file information from the directory/file information obtaining unit 12 (step S30), and it is judged by the list information coincidence judging unit 14 whether some of the directory names in the directory/file information thus obtained are coincident with some of the directory names of the list information stored in the list information storing unit 15 (step S31). When there is some directory name conformed to the list information (that is, a specific directory conformed to the application standard), the list information coincidence judging unit 14 grasps whether an adaptable application is installed in the portable terminal 10. If any adaptable application is installed, the directory name concerned is displayed in a list style with a predetermined color. If no adaptable application is installed in the portable terminal 10, the directory name concerned is displayed in a list style with another color (for example, a red color prohibiting the file operation). Furthermore, with respect to the directories other than the directory names coincident with the list information and the files, the list thereof is directly displayed (step S32). On the other hand, if there is no coincident directory name in step S31, the list is directly displayed (step S33).

Through the above display processing, specific directories on which the file operation can be carried out through the application, specific directories to which the file operation is not allowed because the application is not installed and the other directories on which the file operation can be freely carried out are displayed so as to be discriminable from one another. Therefore, the improper file operation which loses the conformity of the data in the specific directories can be prevented. The display style for the discrimination is not limited to the color, and any display style such as the size of fonts, an emphasized display or the like may be used insofar as the directories can be easily discriminated from one another. By displaying icons of adaptable applications in addition, it can be easily grasped that the displayed directories are specific directories.

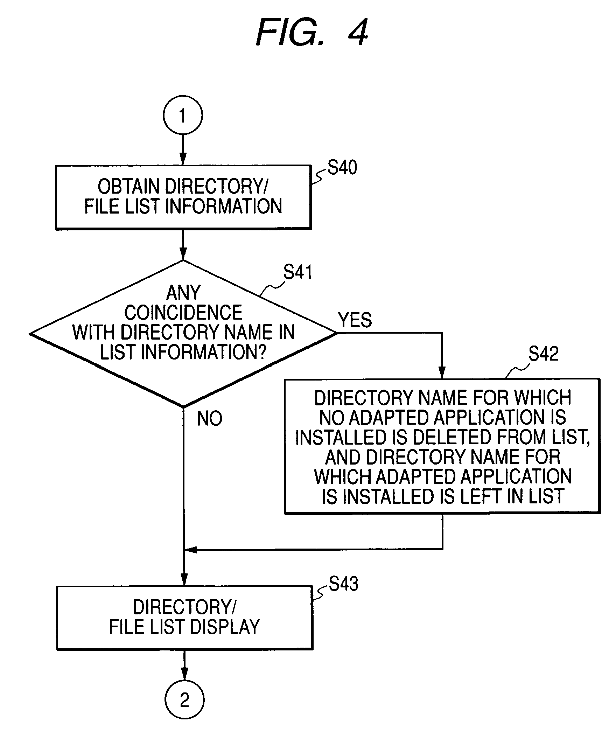

Fig. 4 is a flowchart showing another processing procedure of the directory/file list display. The directory/file list display content creating unit 13 obtains the directory/file information from the directory/file information obtaining unit 12 (step S40), and the list information coincidence judging unit 14 judges whether some of the directory names in the directory/file information thus obtained are coincident with some of the directory names of the list information stored in the list information storing unit 15 (step S41). When some directory name is coincident with the list information (that is, there is some specific directory conformed to the application standard), the list information coincident judging unit 14 grasps whether an adapted application is installed in the portable terminal 10. If no adapted application is installed, the directory name concerned is deleted. If some adapted application is installed in the portable terminal 10, the directory name concerned is held in the list (step S42), and the list of the directory/file information is displayed (step S43). On the other hand, if there is no coincident directory name in step S31, the list is directly displayed (step S43).

In the above display processing, specific directories for which no adapted application is installed are deleted from the list, and thus it is impossible for a user to access the files in the directories concerned, and the improper file operation which loses the conformity of the data in the specific directories can be prevented before happens.

Returning to the flowchart of Fig. 2, when the user selects any directory or file on the basis of the directory/file list displayed on the display unit 17 by using the user interface 18 (step S12), the directory/file list display content creating unit 13 judges whether the selected one is a directory or file (step S13).

When a directory is selected, the directory/file list display content creating unit 13 makes the list information coincidence judging unit 14 judge whether the selected directory is coincident with any one of the specific directories of the list information (step S14). When the selected directory is a specific directory conformed to the application standard, it makes the list information coincident judging unit 14 further judge whether any application adapted to the specific directory concerned is installed in the portable terminal 10 (step S15). When an adapted application is installed, the list information coincidence judging unit 14 starts the application 16 concerned (step S16). Since the file operation is allowed to be carried out through the adapted application, and thus even when a content file in the directory concerned is deleted under the above state, no inconformity of data occurs in the specific directory because the application renews the management file or the like. When the file processing is completed (step S17), the list information coincidence judging unit 14 finishes the application (step S18).

When no adapted application is installed, the directory/file list display content creating unit 13 carries out the processing of controlling the edition of the directory concerned such as file deletion or the like (step S19).

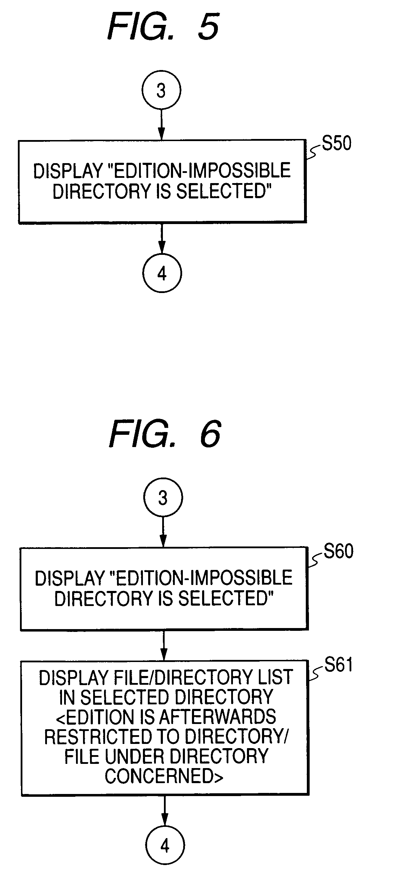

Fig. 5 is a flowchart showing a processing procedure of the directory edition. The directory/file list display content creating unit 13 displays on the display unit 17 that an edition-impossible directory is selected (step S50). Through this display processing, the list of the directory/file list in the selected directory is not displayed. Therefore, it is impossible for the user to access the file operation in the directory concerned, and an improper file operation which loses the conformity of the data in the specific directories can be prevented.

Fig. 6 is a flowchart showing another processing procedure of the directory edition control. The directory/file list display content creating unit 13 displays on the display unit 17 that an edition-impossible directory is selected (step S60), and then the list display in the selected specific directory is carried out (step S61). However, it is set that the operation cannot be carried out even when a file or directory is selected from the list.

In this display processing, the directory/file list display in the selected directory is carried out, however, the user cannot access the files in the directory concerned, so that the improper file operation losing the conformity of the data in the specific directories can be prevented.

When a file is selected in step S13 of Fig. 2, the directory/file list display content creating unit 13 judges whether an application adapted to the extension of the file is installed in the portable terminal 10 (step S21). If any adapted application is installed, it starts the application (step S22), carries out the processing of the file (step S23), and then finishes the application (step S24). On the other hand, when no adapted application is installed, it is displayed that there is no adapted application is carried out (step S25), and the processing is ceased. The procedure from the step S21 to the step S25 is the same as the conventional processing procedure of starting a proper associated application on the basis of the extension of the file.

In the above embodiment, in the procedure of grasping the adapted application by referring to the list information (the step S14 in the flowchart of Fig. 2), the adapted application is grasped from only the specific directory names conformed to the application standard. However, as shown in Fig. 7, it is further preferable that the types of the media are also contained in the list information and it is enabled to judge whether the file operation on the directory of the directory name concerned should be restricted or not in accordance with the type of the medium mounted in the portable terminal. Accordingly, the user is allowed to access a file in a specific directory conformed to an application standard inherent to prescribed media through only an adapted application insofar as the file concerned is recorded in the prescribed media, or access restriction is imposed on the user.

The present invention has been described in detail by referring to the specific embodiments, however, it is obvious to the persons skilled in the art that various modifications and alterations can be made without departing from the spirit and subject matter of the present invention.
The present invention is based on the Japanese Patent Application (Japanese Patent Application No. 2004-007971) filed on January 15, 2004, and the contents thereof are taken in as reference here.

### Industrial Applicability

According to the information equipment of the present invention, only when an application adapted to a specific directory conformed to an application standard is installed in the information equipment, an access to a file in the specific directory concerned is allowed, thereby providing an effect that the conformity of data in specific directories can be prevented from being lost by an improper file operation, and also the information equipment is effectively used as information equipment or the like on which storage media are detachably mounted.

## Claims

1. An information equipment on which a recording medium is detachably mounted, comprising:
a directory information obtaining unit that obtains directory information stored in the recording medium mounted;
a directory judging unit that judges whether a directory name of a directory contained in the directory information obtained by the directory information obtaining unit is contained in a list of directory names conformed to an application standard defining a specification concerning storage of data of each application; and
an access restricting unit that, when the directory of the directory name contained in the list is selected, enables an access to the data in the selected directory through only an application adapted to the selected directory.

2. The information equipment according to claim 1, wherein when the directory of the directory name contained in the list is selected, the access restricting unit judges whether an application adapted to the selected directory exists in the information equipment, and activates the application when the application adapted to the selected directory exists while outputting a message indicating inaccessibility when no application adapted to the selected directory exists.

3. The information equipment according to claim 1 or 2, further comprising a judgment result outputting unit that outputs a judgment result of the directory judging unit with respect to all the directories obtained by the directory information obtaining unit.

4. The information equipment according to claim 3, wherein the judgment result outputting unit displays a directory name contained in the list and a directory name which are not contained in the list while varying color therebetween.

5. The information equipment according to claim 3 or 4, wherein the judgment result outputting unit displays a directory name contained in the list along with an icon associated with an application adapted to a directory of the directory name.

6. The information equipment according to any one of claims 1 to 5, wherein the list information obtaining unit obtains the list stored in the information equipment.

7. The information equipment according to any one of claims 1 to 5, wherein the list information obtaining unit obtains the list stored in the mounted recording medium.

8. The information equipment according to any one of claims 1 to 7, wherein the list is set so that a directory name conformed to the application standard is associated with the type of the recording medium.
